# EUROPÄISCHE PATENTSCHRIFT

(11) **EP 2 984 007 B1**
(45) Veröffentlichungstag und Bekanntmachung des Hinweises auf die Patenterteilung: **29.03.2017**
(21) Anmeldenummer: 14703831.9
(22) Anmeldetag: 10.02.2014
(51) Int. Cl.: B65G 1/137, B25J 9/16

(54) **LAGER- UND KOMMISSIONIERSYSTEM ZUM VOLLAUTOMATISIERTEN ERKENNEN UND KOMMISSIONIEREN VON ARTIKELN, UND ENTSPRECHENDER KOMMISSIONIERPLATZ**
STORAGE AND ORDER-PICKING SYSTEM FOR THE FULLY-AUTOMATED IDENTIFICATION AND PICKING OF ARTICLES, AND CORRESPONDING ORDER-PICKING STATION
SYSTÈME DE STOCKAGE ET DE PRÉPARATION DE COMMANDES SERVANT À L'IDENTIFICATION ET À LA PRÉPARATION DE COMMANDES ENTIÈREMENT AUTOMATISÉES D'ARTICLES, ET STATION DE PRÉPARATION DE COMMANDE CORRESPONDANTE

(30) Priorität: 09.04.2013 AT 502392013
(43) Veröffentlichungstag der Anmeldung: 17.02.2016
(73) Patentinhaber: Knapp AG, 8075 Hart bei Graz (AT)
(72) Erfinder: PUCHWEIN, Peter, A-8076 Vasoldsberg (AT); BLÖDORN, Claus, A-8010 Graz (AT); STELZER, Peter, A-8101 Gratkorn (AT); MATHI, Franz, A-8200 Gleisdorf (AT)
(74) Vertreter: Schwarz & Partner Patentanwälte OG
(86) Internationale Anmeldenummer: PCT/EP2014/052521
(87) Internationale Veröffentlichungsnummer: WO 2014/166650

(56) Entgegenhaltungen:
- EP-A1- 2 315 714
- DE-A1-102009 042 161
- DE-A1-102010 002 317
- DE-A1-102011 053 547
- DE-U1- 29 806 960
- FR-A1- 2 666 315
- FR-A1- 2 666 316
- US-A- 5 374 830
- US-A1- 2010 012 464

## Beschreibung

Die Erfindung betrifft ein Lager- und Kommissioniersystem zum vollautomatisierten Kommissionieren von Artikeln, die in Lagerladehilfsmitteln gelagert und einem Auftrag zugeordnet kommissioniert werden, mit:
einem Artikellager;
einer ersten Fördertechnik, die aus dem Artikellager ausgelagerte Lagerladehilfsmittel zu einem mannlos arbeitenden Kommissionierplatz hin befördert;
einer vollautomatischen Roboter- und Greifeinheit an dem Kommissionierplatz, die zu kommissionierende Artikel aus den Lagerladehilfsmitteln entnimmt und dem Auftrag zugeordnet ablegt, wobei die einem Auftrag zugeordnet insbesondere in einem Auftragsladehilfsmittel abgelegten Artikel anschließend über eine zweite Fördertechnik abtransportiert werden;
einer Bilderkennungseinrichtung zum Ermitteln möglicher Greifpunkte für die Greifeinheit, um Artikel aus den Lagerladehilfsmitteln zu greifen.

Das Dokument EP 2 315 714 B1 offenbart ein solches Lager- und Kommissioniersystem gemäss dem Oberbegriff des Anspruchs 1 und einen Kommissionierplatz gemäss dem Oberbegriff des Anspruchs 13. Durch dieses Lager- und Kommissioniersystem werden zu kommissionierende Artikel aus dem Artikellager ausgelagert und über die erste Fördertechnik der durch einen Delta-Roboter gebildeten Roboter- und Greifeinheit zugeführt. Im Bezug auf den Artikelstrom auf der ersten Fördertechnik betrachtet stromaufwärts ist der Roboter- und Greifeinheit zugeordnet eine Bilderkennungseinrichtung vorgesehen, die auf die mit der ersten Fördertechnik transportierten Lagerladehilfsmittel gerichtet ist. Die bekannte Bilderkennungseinrichtung ermittelt die Lage und Position der in den Lagerladehilfsmitteln transportierten Artikeln selbst dann, wenn diese chaotisch angeordnet in dem Lagerladehilfsmittel enthalten sind. Aus dieser Lage- und Positionsinformation der einzelnen Artikel werden von der Bilderkennungseinrichtung für die Greifeinheit Greifpunkte ermittelt, um einen oder mehrere Artikel aus dem Lagerladehilfsmitteln zu greifen.

Bei dem bekannten Lager- und Kommissioniersystem hat sich als Nachteil ergeben, dass die Bilderkennungseinrichtung zwar gegebenenfalls genaue Greifpunkte für die Greifeinheit ermittelt, jedoch kann es bei dem Transport des Lagerladehilfsmittels von der Bilderkennungseinrichtung bis zur Roboter- und Greifeinheit zu einem Verrutschen einzelner Artikel kommen. Dies passiert insbesondere dann, wenn die Artikel in dem Lagerladehilfsmittel chaotisch auf einem Haufen liegen und somit leicht verrutschen können. Die Greifeinheit hat in so einem Fall falsche Greifpunkte und kann den Artikel nicht greifen, weshalb es zu einer Fehlersituation an dem Kommissionierplatz kommt. Diese Fehlersituation ist von der übergeordneten Steuereinrichtung nur sehr schwer korrigierbar, da das Lagerladehilfsmittel nun nochmals über die gesamte Fördertechnik dem Kommissionierplatz zugeführt werden muss. Hierdurch kann es zu Verzögerungen oder Fehlern in der Kommissionierung kommen.

Weiters hat sich bei dem bekannten Lager- und Kommissioniersystem der Nachteil ergeben, dass es nicht möglich ist, mehrere Artikel aus demselben Lagerladehilfsmittel zu kommissionieren, ohne für jeden zusätzlich zu kommissionierenden Artikel die Fördertechnik und somit die vorgelagerte Bilderkennungseinrichtung erneut zu durchlaufen, da sich das Schlichtmuster bzw. die Position jedes einzelnen Artikels nach einem Greifvorgang verändern kann.

Der Erfindung liegt die Aufgabe zugrunde, ein Lager- und Kommissioniersystem zu schaffen, bei dem die vorstehenden Nachteile vermieden sind. Erfindungsgemäß wird diese Aufgabestellung dadurch gelöst, dass die Bilderkennungseinrichtung zumindest zwei Kameras im Bereich der Greifeinheit aufweist, deren Aufnahmerichtungen aufeinander abgestimmt und insbesondere zueinander geneigt in das im Greifbereich der Greifeinheit befindliche Lagerladehilfsmittel ausgerichtet sind, und dass die Greifeinheit zur Ermittlung möglicher Greifpunkte auch kurzfristig zur Seite gefahren werden kann, um zumindest zwei Kameras der Bilderkennungseinrichtung freien Blick auf die Artikel in dem Lagerladehilfsmittel zu geben.

Hierdurch ist der Vorteil erhalten, dass die Bilderkennungseinrichtung unmittelbar vor und sogar während der Annäherung der Roboter- und Greifeinheit an den zu greifenden Artikel mögliche Greifpunkte des ausgewählten Artikels ermittelt. Da die Bilderkennungseinrichtung direkt über der Roboter- und Greifeinheit vorgesehen ist, ist kein Transport des Lagerladehilfsmittels von der Bilderkennungseinrichtung zu der Roboter- und Greifeinheit nötig, bei dem der oder die zu greifenden Artikel ihre Position oder Lage verändern könnten. Durch die Anordnung der Kameras der Bilderkennungseinrichtung und durch das unmittelbare Weitergeben der von der Bilderkennungseinrichtung ermittelten Greifpunkte an die Roboter- und Greifeinheit kann auch noch während dem Greifvorgang die Roboter- und Greifeinheit nachjustiert werden und der zum Kommissionieren vorgesehene Artikel zuverlässig gegriffen werden.

Als weiterer Vorteil hat sich ergeben, dass an dem Kommissionierplatz aus einem Lagerladehilfsmittel mehrere Artikel hintereinander kommissioniert werden können, da nach jedem Greifvorgang eine weitere Bilderkennung durchgeführt werden kann. Das wird durch eine Synchronisierung der Bewegung des Greifers der Greifeinheit mit der aktuellen Bildinformation der Bilderkennungseinrichtung erreicht.

Als besonders vorteilhaft hat sich jedoch erwiesen die Position der zumindest zwei und vorteilhafterweise vier Kameras der Bilderkennungseinrichtung von den im dem Lager- und Kommissioniersystem verwendeten Lagerladehilfsmitteln abhängig festzulegen. In diesem Zusammenhang kommt es insbesondere auf die Höhe und die Breite der Lagerladehilfsmittel an und, ob Facheinteilungen die Lagerladehilfsmittel unterteilen. Hierdurch ist sichergestellt, dass alle Bereiche in den Lagerladehilfsmitteln von der Bilderkennungseinrichtung zur Bestimmung der Lage und Position der Artikel gut eingesehen werden können.

Weiters hat sich als vorteilhaft erwiesen den Bereich der Bilderkennungseinrichtung mit einem Muster oder Gitter zu beleuchten. Hierdurch kann die Genauigkeit der Positions- und Lagebestimmung deutlich verbessert werden. Besonders vorteilhaft ist es Beleuchtungsmittel zu wählen, die in einem für den Menschen nicht sichtbaren Frequenzbereich beleuchten, und Kameras zu wählen, die eben in diesem Frequenzbereich empfindlich sind.

Der von der Greifeinheit gegriffene Artikel kann von der Roboter- und Greifeinheit in den Aufnahmebereich einer Kamera der Bilderkennungseinrichtung zur Identifizierung des Artikels anhand einer an dem Artikel angebrachten Kennung (z.B. Barcode) gehalten werden. Ebenso kann der gegriffene Artikel zu einem Labelapplikator gehalten werden, der ein Label beziehungsweise einen Aufkleber auf den Artikel abringt. Hierdurch ist der Vorteil erhalten, dass von der Greifeinheit gegriffene Artikel zuverlässig identifiziert und gegebenenfalls noch zusätzlich gekennzeichnet werden können. Abhängig davon welcher Artikel nun identifiziert wurde, kann die Roboter- und Greifeinheit den gegriffenen Artikel in unterschiedliche Auftragsladehilfsmittel oder an einen anderen Platz ablegen. Hierdurch ist der Vorteil erhalten, dass in den Lagerladehilfsmitteln falsch gelagerte und auch bereits mit der Greifeinheit gegriffene Artikel trotzdem richtig weiter verarbeitet werden.

Weitere vorteilhafte Ausgestaltungen des erfindungsgemäßen Lager- und Kommissioniersystems werden im Folgenden anhand der Figuren näher erläutert.
Figur 1 zeigt schematisch einen Ausschnitt des Layouts eines Lager- und Kommissioniersystems mit einem mannlos arbeitenden Kommissionierplatz.
Figur 2 zeigt den mannlos arbeitenden Kommissionierplatz gemäß Figur 1 in einer Schrägansicht.
Figur 3 zeigt eine Bilderkennungseinrichtung mit zwei Kameras.
Figur 4 zeigt eine Bilderkennungseinrichtung mit vier Kameras.
Figur 5 zeigt den Kommissionierplatz gemäß Figur 2 in einer Draufsicht.
Figur 6 zeigt den Kommissionierplatz gemäß Figur 2 in einer Seitenansicht.

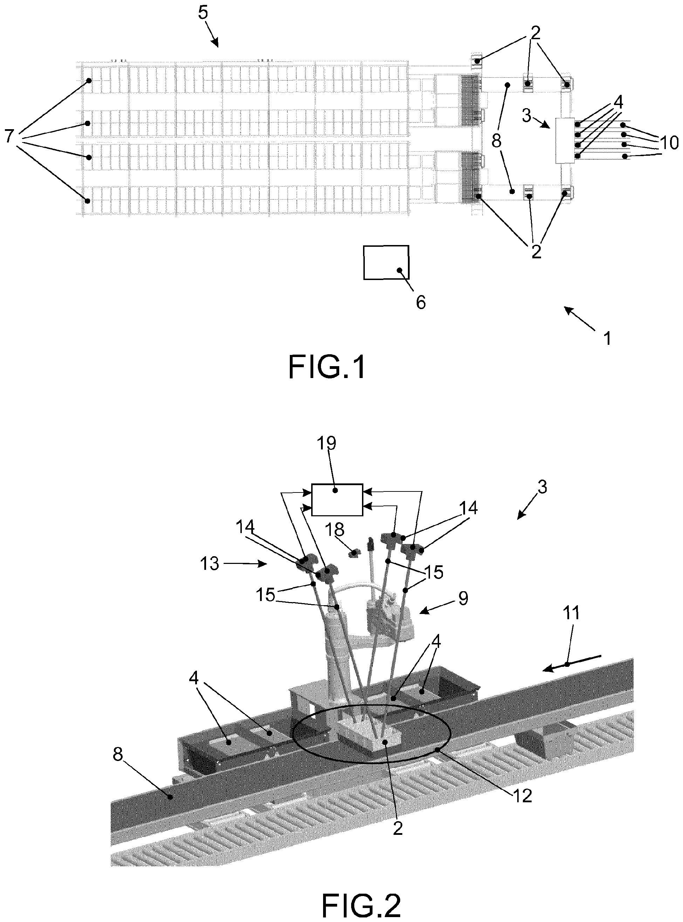

Figur 1 zeigt schematisch einen Ausschnitt des Layouts eines Lager- und Kommissioniersystems 1 zum vollautomatisierten Kommissionieren von Artikeln, die in Lagerladehilfsmitteln 2 gelagert und an einem mannlos arbeitenden Kommissionierplatz 3 einem Auftrag zugeordnet in eines von vier Auftragsladehilfsmittel 4 kommissioniert werden. Das Lager- und Kommissioniersystem 1 weist ein Artikellager 5 auf, in dem in mehreren Ebenen Artikel in den Lagerladehilfsmitteln 2 gelagert werden. Eine Steuereinrichtung 6 verwaltet die Lagerplätze in dem Artikellager 5 und steuert sämtliche nachstehend beschriebenen Einrichtungen zum Transport und zur Kommissionierung der Artikel an.

Ebenenbediengeräte, die zwischen den Regalen 7 des Artikellagers 5 fahren, holen die Lagerladehilfsmittel 2 auszulagernder Artikel und übergeben diese an Lifte in dem Artikellager 5. Von diesen Liften werden die Lagerladehilfsmittel 2 an eine erste Fördertechnik 8 übergeben, die diese aus dem Artikellager 5 ausgelagerten Lagerladehilfsmittel 2 zu dem mannlos arbeitenden Kommissionierplatz 3 hin befördert. An dem Kommissionierplatz 3 wird ein oder werden mehrere Artikel von einer vollautomatischen Roboter- und Greifeinheit 9 aus dem Lagerladehilfsmittel 2 entnommen und dem Auftrag zugeordnet in dem dafür vorgesehenen Auftragsladehilfsmittel 4 abgelegt, worauf anhand der weiteren Figuren im Detail eingegangen ist.

Nach dem Kommissionieren wird das Lagerladehilfsmittel 2 über die erste Fördertechnik 8 wieder in das Artikellager 5 eingelagert, wenn Artikeln in dem Lagerhilfsmittel 2 verblieben sind. Wenn ein Auftrag fertig in ein Auftragsladehilfsmittel 4 kommissioniert wurde, dann wird das Auftragsladehilfsmittel 4 über eine zweite Fördertechnik 10 abtransportiert. Das Lager- und Kommissioniersystem 1, von dessen Layout in Figur 1 nur ein Ausschnitt dargestellt ist, umfasst eine Vielzahl von Regalen 7 und mehrere parallel angeordnete mannlos arbeitende Kommissionierplätze 3. Je nach Ausgestaltung des Kommissionierplatzes 3 kann auch noch in mehr als vier Auftragsladehilfsmittel 4 parallel von der Roboter- und Greifeinheit 9 hinein kommissioniert werden. Zehn oder zwanzig Auftragsladehilfsmittel 4 parallel zu befüllen ist je nach Realisierung der Roboter- und Greifeinheit und der zweiten Fördertechnik 10 problemlos durchführbar.

Figur 2 zeigt den mannlos arbeitenden Kommissionierplatz 3 in einer Schrägansicht. Die Lagerladehilfsmittel 2 werden von der ersten Fördertechnik 8 in Richtung 11 durch einen Greifbereich 12 der Greifeinheit 9 hindurch transportiert. Die Greifeinheit 9 ist durch einen am Markt erhältlichen Knickgreifer gebildet, wie er beispielsweise in der WO 2012/163666A1 beschrieben ist. Als Roboter wird vorzugsweise ein dem Fachmann bekannter sogenannter SCARA-Roboter verwendet. Die Greifeinheit 9 könnte aber ebenfalls an einem Delta-Roboter befestigt sein, wie er in der vorstehend erwähnten EP 2 315 714 B1 beschrieben ist. Zur Ansteuerung solcher Greifeinheiten 9, um ein Objekt oder spezieller einen Artikel zu greifen und aufzuheben, müssen an die Robotersteuerung Informationen bezüglich der Greifpunkte übermittelt werden. Abhängig von der Position und Lage des Artikels und abhängig von der äußeren Form und Stabilität wird ein Greifpunkt festgelegt.

Der Kommissionierplatz 3 weist nunmehr eine Bilderkennungseinrichtung 13 zum Ermitteln möglicher Greifpunkte für die Greifeinheit 9 auf, um Artikel aus den Lagerladehilfsmitteln 2 zu greifen. Die Bilderkennungseinrichtung 13 gemäß Figur 2 weist vier Kameras 14 im Bereich der Roboter- und Greifeinheit 9 auf, die in einem Rechteck über dem Greifbereich 12 angeordnet sind. Die Aufnahmerichtungen 15 der vier Kameras 14 sind zueinander geneigt und so ausgerichtet, dass die Kameras 14 in das im Greifbereich 12 der Greifeinheit 9 befindliche Lagerladehilfsmittel 2 hineinreichen.

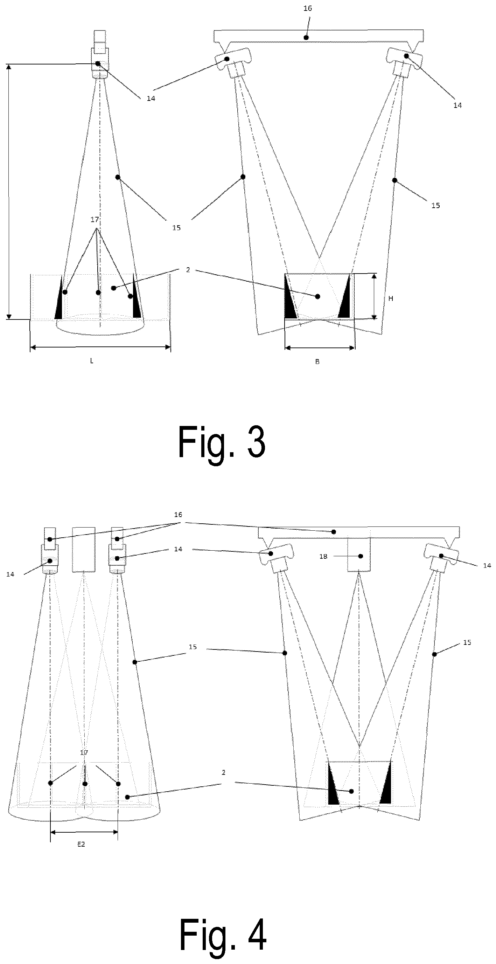

Figur 3 zeigt eine Bilderkennungseinrichtung mit zwei Kameras 14 mit einem Lagerladehilfsmittel 2 in einer schematischen Darstellung von zwei Seiten. Die beiden Kameras 14 sind auf einem Kameraarm 16 angeordnet, der den Abstand zwischen den Kameras 14 festlegt und der in einer Entfernung E1 von dem mit der ersten Fördertechnik 8 transportierten Lagerladehilfsmittel 2 befestigt ist. Das Lagerladehilfsmittel 2 weist eine Höhe H, eine Breite B und eine Länge L auf, wobei es zur Lagerung unterschiedlicher Arten von Artikeln mittels Facheinteilungen 17 unterteilt ist. Durch die Neigung der Aufnahmerichtungen 15 der Kameras 14 zueinander kommt es durch die Wände und die Facheinteilungen 17 der Lagerladehilfsmitteln 2 zu, in der Figur 3 grau dargestellten Bereichen in dem Lagerladehilfsmittel 2, in denen die Bilderkennungseinrichtung keine oder nur unzureichende Informationen bezüglich der Lage und Position der in dem Lagerladehilfsmittel 2 befindlichen Artikel ermitteln kann. Es ist somit vorteilhaft die Position der Kameras 14 und deren Anzahl abhängig von den Lagerladehilfsmitteln 2 und deren geometrischen Dimensionen festzulegen.

Figur 4 zeigt eine Bilderkennungseinrichtung mit vier Kameras 14 mit einem Lagerladehilfsmittel 2 in einer schematischen Darstellung von zwei Seiten. Es ist deutlich zu erkennen, dass die Festlegung des Abstandes der Kameras 14 in einer Entfernung E2, die dem Abstand der Facheinteilungen 17 entspricht, ermöglicht, dass alle Bereiche in dem Lagerladehilfsmittel 2 durch die Bilderkennungseinrichtung gut erkannt werden, um die Lage und Position der Artikel in dem Lagerladehilfsmittel 2 zu ermitteln.

Die Bilderkennungseinrichtung gemäß Figur 4 weist nunmehr weiters Beleuchtungsmittel 18 auf, die das im Greifbereich 12 befindliche Lagerladehilfsmittel 2 mit dem Muster eines Gitters beleuchten. Dem Fachmann sind Beleuchtungsmittel zum Beleuchten eines Objekts mit einem Muster oder Gitter an sich bekannt, weshalb diese hier nicht näher beschrieben werden.

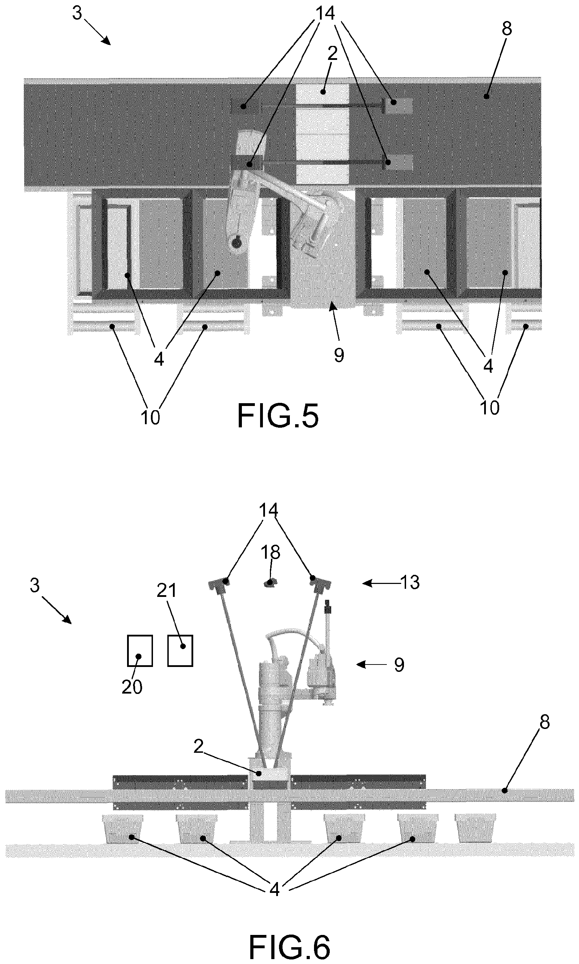

Figur 5 zeigt den Kommissionierplatz 3 gemäß Figur 2 in einer Draufsicht und Figur 6 in einer Seitenansicht. Die von den vier Kameras 14 ermittelte Bildinformation wird von einer Auswertungseinrichtung 19 der Bilderkennungseinrichtung 13 ausgewertet und es werden kontinuierlich mögliche Greifpunkte an die Greifeinheit 9 übermittelt. Hierfür empfängt die Auswerteeinrichtung 19 Informationen von der Steuereinrichtung 6 welche Art von Artikel in dem Lagerladetransportmittel 2 und welche Anzahl dieses Artikels aus dem Lagerladetransportmittel 2 entnommen werden soll. Die Auswerteeinrichtung 19 ermittelt anhand der Bildinformation der vier Kameras 14 die Lage und Position der gewünschten Artikel und bestimmt den oder die Artikel und deren Greifpunkte für die Robotersteuerung.

Durch das Vorsehen der Bilderkennungseinrichtung 13 mit den vier Kameras 14 im Bereich der Greifeinheit 9, um kontinuierlich mögliche Greifpunkte der zu kommissionierenden Artikel zu ermitteln, ist der Vorteil erhalten, dass kein Transport des Lagerladehilfsmittels 2 von der Bilderkennungseinrichtung 13 zu der Roboter- und Greifeinheit 9 nötig ist, bei dem der oder die zu greifenden Artikel ihre Position oder Lage verändern könnten. Durch die Anordnung der Kameras 14 der Bilderkennungseinrichtung 13 und durch das unmittelbare Weitergeben der von der Bilderkennungseinrichtung 13 ermittelten Greifpunkte an die Greifeinheit 9 kann auch noch während dem Greifvorgang die Roboter- und Greifeinheit 9 nachjustiert werden und der zum Kommissionieren vorgesehene Artikel zuverlässig gegriffen werden, wenn dieser seine Lage oder Position unmittelbar vor dem Greifen verändert, was im Fall von mehreren Greifvorgängen aus einem Lagerladehilfsmittel 2 meistens erforderlich ist.

Besonders vorteilhaft ist hierbei, dass die Bilderkennungseinrichtung 13 und Roboter- und Greifeinheit 9 derart eng zusammenarbeiten, dass Artikel nicht nur bei stehender erster Fördertechnik 8 sondern auch bei mit normaler Transportgeschwindigkeit der Lagerladehilfsmitteln 2 entnommen und kommissioniert werden können. Die Transportgeschwindigkeit der ersten Fördertechnik 8 kann während dem Kommissionieren beispielsweise 0,1 bis 1,2m/s betragen. Hierdurch sind, verglichen mit bekannten mannlos arbeitenden Kommissionierplätzen gemäß dem Stand der Technik, wesentlich höhere Kommissionierleistungen möglich.

Gemäß einem Ausführungsbeispiel der Erfindung wären über den Auftragsladehilfsmitteln Klappschalen vorgesehen, auf die die Roboter- und Greifeinheit die aus den Lagerladehilfsmitteln entnommenen Artikel legen würde. Nachdem ein oder mehrere für das Auftragsladehilfsmittel vorgesehene Artikel von der Roboter- und Greifeinheit auf die Klappschale gelegt wurden, würde die Steuereinrichtung die auf der Klappschale befindlichen Artikel in das Auftragsladehilfsmittel abkippen. Hierdurch kann das Kommissionieren weiter beschleunigt werden, da die Roboter- und Greifeinheit nicht für jeden Artikel bis in jedes Auftragsladehilfsmittel greifen muss und der Wechsel von zwei Auftragsladehilfsmitteln auf der Fördertechnik durch das Ablegen auf der Schale zeitlich überbrückt werden kann

Die Bilderkennungseinrichtung 13 weist nunmehr eine weitere Kamera 20 zum Erkennen einer Kennung des mit der Greifeinheit 9 gegriffenen Artikels auf. Die Roboter- und Greifeinheit 9 hält den gegriffenen Artikel zum Erkennen der Kennung nach dem Aufnehmen aus dem Lagerladehilfsmittel 2 in den Aufnahmebereich der zusätzlichen Kamera 20. Hierbei kann beispielsweise ein auf der Verpackung des Artikels befindlicher Barcode oder QR-Code von der Auswerteeinrichtung 19 erkannt werden, um sicherzustellen, dass der aufgenommene Artikel auch wirklich der zu kommissionierende Artikel ist. Sollten in einem Lagerladehilfsmittel 2 mehrere Arten von Artikeln in einem Bereich des Lagerladehilfsmittels 2 gemeinsam liegen, dann könnte die Roboter- und Greifeinheit 9 einen dieser Artikel wahllos greifen und zu der Kamera 20 halten. Anhand der Kennung würde die Auswerteeinheit 19 dann erkennen, ob dieser Artikel tatsächlich kommissioniert werden soll und basierend auf dieser Kennung auch festlegen, in welchen der Auftragsladehilfsmittel 4 der aufgenommene Artikel abgelegt werden soll.

Der Kommissionierplatz 3 des Lager- und Kommissioniersystems 1 weist nunmehr weiters einen Labelapplikator 21 auf, der zum Anbringen eines Labels beziehungsweise Aufklebers auf dem von der Greifeinheit 9 gegriffenen Artikel ausgebildet ist. Zum Anbringen des Labels auf den gegriffenen Artikel ist die Roboter- und Greifeinheit 9 zum Transportiert des Artikels zu dem Labelapplikator 21 ausgebildet. Der Label kann zur Kennung des Artikels wiederum einen Barcode, QR-Code oder einen RFID Tag aufweisen. Hierdurch ist der Vorteil erhalten, dass von der Greifeinheit 9 gegriffene Artikel zuverlässig identifiziert und gegebenenfalls noch zusätzlich gekennzeichnet werden können. Beispielsweise könnten eine Kennzeichnung auf die Verpackung eines Artikels geklebt werden, dass die Verpackung beschädigt ist, wenn dies von der Bilderkennungseinrichtung 13 während dem Kommissionieren erkannt wurde.

Der Kommissionierplatz 3 ist nunmehr weiters dazu ausgebildet, die kommissionierten Artikel von der Roboter- und Greifeinheit 9 in das Auftragsladehilfsmittel 4 gestapelt oder geschlichtet abzulegen. Hierdurch ist eine besonders platzsparende Positionierung der kommissionierten Artikel gegeben. Ebenso könnten aber auch leichtere Artikel auf schwerere Artikel in das Auftragsladehilfsmittel 4 von der Roboter- und Greifeinheit 9 gelegt werden.

Der Kommissionierplatz 3 ist nunmehr weiters dazu ausgebildet, dass die Roboter- und Greifeinheit 9 Lagerladehilfsmitteln 2 statt Artikeln kommissioniert. Hierdurch können leere Lagerladehilfsmittel 2 von der ersten Fördertechnik 8 auf der zweiten Fördertechnik 10 gesammelt werden.

Es kann erwähnt werden, dass die Kameras 14 auch in einem Kreis oder einer Ellipse um die Roboter- und Greifeinheit 9 angeordnet sein könnten. Die für die jeweilige Realisierung vorteilhafte Anordnung der Kameras 14 im Bereich der Roboter- und Greifeinheit wird derart festgelegt, dass möglichst viele der Kameras 14 während möglichst der gesamten Zeit freien Blick auf das Lagerladehilfsmittel 2 haben. Durch das Vorsehen mehrerer Kameras ist aber erreicht, dass auch dann, wenn gerade eine oder zwei Kameras keinen freien Blick auf das Lagerladehilfsmittel 2 haben, die anderen Kameras noch Bildinformationen für die Bilderkennungseinrichtung liefern. Im Ausnahmefall kann erfindungsgemäss der Greifer der Greifeinheit von dem Roboter auch kurzfristig zur Seite gefahren werden, um allen Kameras freien Blick auf die Artikel in dem Lagerladehilfsmittel zu geben.

Es kann erwähnt werden, dass auch andere Muster als Gitter, also beispielsweise rautenförmige oder kreisförmige Linienstrukturen, von den Beleuchtungsmitteln zur besseren Erkennung der Position und Lage der Artikel auf das Lagerladehilfsmittel beleuchtet werden können.

Es kann erwähnt werden, dass auch fünf oder beispielsweise zehn Kameras 14 bei der Bilderkennungseinrichtung vorgesehen sein könnten.

Es kann erwähnt werden, dass die Aufnahmerichtungen 15 der zwei oder mehr Kameras der Bilderkennungseinrichtung 13 zueinander parallel oder unter einem bestimmten Winkel ausgerichtet sein können. Als besonders vorteilhaft hat sich erwiesen die Aufnahmeeinrichtungen 15 zueinander geneigt in das in dem Greifbereich 12 der Greifeinheit 9 befindliche Lagerladehilfsmittel 2 auszurichten. Hierdurch kann der gesamte Bereich in dem Lagerladehilfsmittel 2 besonders gut eingesehen werden.

## Patentansprüche

1. Lager- und Kommissioniersystem (1) zum vollautomatisierten Kommissionieren von Artikeln, die in Lagerladehilfsmitteln (2) gelagert und einem Auftrag zugeordnet kommissioniert werden, mit:
einem Artikellager (5);
einer ersten Fördertechnik (8), die aus dem Artikellager (5) ausgelagerte Lagerladehilfsmittel (2) zu einem mannlos arbeitenden Kommissionierplatz (3) hin befördert;
einer vollautomatischen Greifeinheit (9) an dem Kommissionierplatz (3), die zu kommissionierende Artikel aus den Lagerladehilfsmitteln (2) entnimmt und dem Auftrag zugeordnet ablegt, wobei die einem Auftrag zugeordnet insbesondere in einem Auftragsladehilfsmittel (4) abgelegten Artikel anschließend über eine zweite Fördertechnik (10) abtransportiert werden;
einer Bilderkennungseinrichtung (13) zum Ermitteln möglicher Greifpunkte für die Greifeinheit (9), um Artikel aus den Lagerladehilfsmitteln (2) zu greifen, **dadurch gekennzeichnet, dass**
die Bilderkennungseinrichtung (13) zumindest zwei Kameras (14) im Bereich der Greifeinheit (9) aufweist deren Aufnahmerichtungen (15) aufeinander abgestimmt und insbesondere zueinander geneigt in das im Greifbereich (12) der Greifeinheit (9) befindliche Lagerladehilfsmittel (2) ausgerichtet sind und dass die Greifeinheit (9) zur Ermittlung möglicher Greifpunkte auch kurzfristig zur Seite gefahren werden kann, um zumindest zwei Kameras (14) der Bilderkennungseinrichtung (13) freien Blick auf die Artikel in dem Lagerladehilfsmittel (2) zu geben.

2. Lager- und Kommissioniersystem (1) gemäß Anspruch 1, **dadurch gekennzeichnet, dass** die Bilderkennungseinrichtung (13) zum Ermitteln der möglichen Greifpunkte und die Greifeinheit (9) zum Greifen der Artikel aus dem Lagerladehilfsmittel (2) ausgebildet ist, während das Lagerladehilfsmittel (2) steht oder mit verlangsamter oder insbesondere mit normaler Transportgeschwindigkeit der ersten Fördertechnik (8) transportiert wird.

3. Lager- und Kommissioniersystem (1) gemäß einem der vorherigen Ansprüche, **dadurch gekennzeichnet, dass** die Greifeinheit (9) auch während der Annäherung des Greifers an den zu greifenden Artikel zur Anpassung der Greifpunkte zum Aufnehmen des Artikels ausgebildet ist, wenn sich die laufend von der Bilderkennungseinrichtung (13) ermittelten möglichen Greifpunkte verändert haben.

4. Lager- und Kommissioniersystem (1) gemäß einem der vorherigen Ansprüche, **dadurch gekennzeichnet, dass** zumindest eines der eine Länge (L), eine Breite (B) und eine Höhe (H) aufweisenden Lagerladehilfsmittel (2) Teil des Lager- und Kommissioniersystems (1) ist und, dass der Abstand zwischen den zumindest zwei Kameras (14) und der Abstand der Kameras (14) von dem Lagerladehilfsmittel (2) abhängig von der Höhe (H) und/oder von der Breite (B) des Lagerladehilfsmittels (2) beziehungsweise der Facheinteilung (17) des Lagerladehilfsmittels (2) ist, das von der ersten Fördertechnik transportiert wird, festgelegt ist.

5. Lager- und Kommissioniersystem (1) gemäß einem der vorherigen Ansprüche, **dadurch gekennzeichnet, dass** Beleuchtungsmittel (18) vorgesehen sind, die das im Greifbereich (12) befindliche Lagerladehilfsmittel (2) beleuchten und insbesondere mit einem Muster beziehungsweise Gitter beleuchten.

6. Lager- und Kommissioniersystem (1) gemäß Anspruch 5, **dadurch gekennzeichnet, dass** die Beleuchtungsmittel (18) im für den Menschen unsichtbaren Frequenzbereich beleuchten und, dass die Kameras (14) insbesondere in diesem Frequenzbereich empfindlich ausgebildet sind.

7. Lager- und Kommissioniersystem (1) gemäß einem der vorherigen Ansprüche, **dadurch gekennzeichnet, dass** zumindest vier Kameras (14) um die Greifeinheit (9) angeordnet sind.

8. Lager- und Kommissioniersystem (1) gemäß einem der vorherigen Ansprüche, **dadurch gekennzeichnet, dass** über zumindest einem Auftragsladehilfsmittel (4) eine Klappschale vorgesehen ist und, dass die Greifeinheit (9) zum Ablegen der aus den Lagerladehilfsmitteln (2) aufgenommene Artikel auf der Klappschale ausgebildet ist, bevor diese von der Klappschale in das Auftragsladehilfsmittel (4) gekippt werden.

9. Lager- und Kommissioniersystem (1) gemäß einem der vorherigen Ansprüche, **dadurch gekennzeichnet, dass** mit der Bilderkennungseinrichtung (13) eine auf dem mit der Greifeinheit (9) aufgenommenen Artikel enthaltene den Artikel kennzeichnende Kennung erkannt und hiervon abhängig die Greifeinheit (9) zum Ablegen des Artikels in das Auftragsladehilfsmittel (4) oder ein anderes Ladehilfsmittel ausgebildet ist.

10. Lager- und Kommissioniersystem (1) gemäß Anspruch 9, **dadurch gekennzeichnet, dass** die Bilderkennungseinrichtung (13) zum Erkennen der Kennung des Artikels eine zusätzliche Kamera (14) aufweist und, dass die Greifeinheit (9) zum Erkennen der Kennung den gegriffenen Artikel in den Aufnahmebereich der zusätzlichen Kamera (14) hält.

11. Lager- und Kommissioniersystem (1) gemäß einem der vorherigen Ansprüche, **dadurch gekennzeichnet, dass** die kommissionierten Artikel von der Greifeinheit (9) in ein Auftragsladehilfsmittel (4) gestapelt oder geschlichtet werden.

12. Lager- und Kommissioniersystem (1) gemäß einem der vorherigen Ansprüche, **dadurch gekennzeichnet, dass** die Greifeinheit (9) zum Sammeln von leeren Lagerladehilfsmitteln (2) von der ersten Fördertechnik (8) auf die zweite Fördertechnik (10) ausgebildet ist.

13. Mannlos arbeitender Kommissionierplatz (3) für ein Lager- und Kommissioniersystem (1) zum vollautomatisierten Kommissionieren von Artikeln, die in Lagerladehilfsmitteln (2) gelagert und einem Auftrag zugeordnet kommissioniert werden, der Kommissionierplatz (3) umfassend:
eine vollautomatische Greifeinheit (9), die zu kommissionierende Artikel aus den Lagerladehilfsmitteln (3) entnimmt und dem Auftrag zugeordnet ablegt, wobei die einem Auftrag zugeordnet insbesondere in einem Auftragsladehilfsmittel (4) abgelegten Artikel anschließend über eine zweite Fördertechnik (10) abtransportiert werden;
und eine Bilderkennungseinrichtung (13) zum Ermitteln möglicher Greifpunkte für die Greifeinheit (9), um Artikel aus den Lagerladehilfsmitteln (2) zu greifen, **dadurch gekennzeichnet, dass**
die Bilderkennungseinrichtung (13) zumindest zwei Kameras (14) im Bereich der Greifeinheit (9) aufweist deren Aufnahmerichtungen (15) aufeinander abgestimmt und insbesondere zueinander geneigt in das im Greifbereich (12) der Greifeinheit (9) befindliche Lagerladehilfsmittel (2) ausgerichtet sind und dass die Greifeinheit (9) zur Ermittlung möglicher Greifpunkte auch kurzfristig zur Seite gefahren werden kann, um zumindest zwei Kameras (14) der Bilderkennungseinrichtung (13) freien Blick auf die Artikel in dem Lagerladehilfsmittel (2) zu geben.

## Claims

1. A storage and order-picking system (1) for the fully-automated picking of articles that are stored in storage loading aids (2) and are picked according to an order, comprising:
an article store (5);
a first conveyor system (8) that conveys storage loading aids (2) leaving the article store (5) to a picking station (3) that is operated unmanned;
a fully-automated gripping unit (9) on said picking station (3), which removes articles to be picked from said storage loading aids (2) and deposits them in accordance with the order, the articles deposited according to an order, particularly in an order loading aid (4), subsequently being conveyed away by means of a second conveyor system (10);
an image identification device (13) for determining possible gripping points for the gripping unit (9) in order to grip articles from the storage loading aids (2), **characterized in that** the image identification device (13) comprises at least two cameras (14) in the region of the gripping unit (9), the capturing directions (15) of which are aligned into the storage loading aid (2) located in the gripping region (12) of the gripping unit (9), while being coordinated and in particular inclined toward each other, and that the gripping unit (9) can be moved sideways also at short notice for determining possible gripping points in order to allow at least two cameras (14) of the image identification device (13) to have a clear view of the articles in the storage loading aid (2).

2. A storage and order-picking system (1) according to claim 1, **characterized in that** the image identification device (13) is configured for determining the possible gripping points and the gripping unit (9) is configured for gripping the articles from the storage loading aid (2), while the storage loading aid (2) is stationary or is transported at a reduced speed or in particular at the normal transport speed of the first conveyor system (8).

3. A storage and order-picking system (1) according to any of the preceding claims, **characterized in that** the gripping unit (9) is configured for adjusting the gripping points for picking up the article also during the approach of the gripper toward the article to be gripped, if the possible gripping points continuously determined by the image identification device (13) have changed.

4. A storage and order-picking system (1) according to any of the preceding claims, **characterized in that** at least one of the storage loading aids (2) exhibting a length (L), a width (B) and a height (H) is part of the storage and order-picking system (1) and that the space between the at least two cameras (14) and the distance of the cameras (14) from the storage loading aid (2) are determined depending on the height (H) and/or the width (B) of the storage loading aid (2) or, respectively, the compartment partition (17) of the storage loading aid (2), which is transported by the first conveyor system.

5. A storage and order-picking system (1) according to any of the preceding claims, **characterized in that** illuminants (18) are provided which illuminate the storage loading aid (2) located in the gripping region (12) and, in particular, illuminate it with a pattern or, respectively, a grid.

6. A storage and order-picking system (1) according to claim 5, **characterized in that** the illuminants (18) illuminate in the frequency range not visible to humans and that the cameras (14) are designed so as to be sensitive particularly in this frequency range.

7. A storage and order-picking system (1) according to any of the preceding claims, **characterized in that** at least four cameras (14) are arranged around the gripping unit (9).

8. A storage and order-picking system (1) according to any of the preceding claims, **characterized in that** a folding tray is provided above at least one order loading aid (4) and that the gripping unit (9) is configured for depositing the articles collected from the storage loading aids (2) on the folding tray, before they are tipped from the folding tray into the order loading aid (4).

9. A storage and order-picking system (1) according to any of the preceding claims, **characterized in that**, by means of the image identification device (13), an identification contained on the article picked up by the gripping unit (9) and marking said article is discerned and, depending therefrom, the gripping unit (9) is configured for depositing the article in the order loading aid (4) or another loading aid.

10. A storage and order-picking system (1) according to claim 9, **characterized in that** the image identification device (13) comprises an additional camera (14) for discerning the identification of the article and that the gripping unit (9) holds the gripped article into the captured area of the additional camera (14) for discerning the identification.

11. A storage and order-picking system (1) according to any of the preceding claims, **characterized in that** the picked articles are stacked or arranged in order in an order loading aid (4) by the gripping unit (9).

12. A storage and order-picking system (1) according to any of the preceding claims, **characterized in that** the gripping unit (9) is configured for collecting empty storage loading aids (2) from the first conveyor system (8) onto the second conveyor system (10).

13. A picking station (3) that is operated unmanned for a storage and order-picking system (1) for the fully-automated picking of articles that are stored in storage loading aids (2) and are picked according to an order, the picking station (3) comprising:
a fully-automated gripping unit (9) which removes articles to be picked from said storage loading aids (3) and deposits them in accordance with the order, the articles deposited according to an order, particularly in an order loading aid (4), subsequently being conveyed away by means of a second conveyor system (10); and
an image identification device (13) for determining possible gripping points for the gripping unit (9) in order to grip articles from the storage loading aids (2), **characterized in that** the image identification device (13) comprises at least two cameras (14) in the region of the gripping unit (9), the capturing directions (15) of which are aligned into the storage loading aid (2) located in the gripping region (12) of the gripping unit (9), while being coordinated and in particular inclined toward each other, and that the gripping unit (9) can be moved sideways also at short notice for determining possible gripping points in order to allow at least two cameras (14) of the image identification device (13) to have a clear view of the articles in the storage loading aid (2).

## Revendications

1. Système de stockage et de préparation de commandes (1) pour la préparation entièrement automatisée de commandes d'articles stockés dans des moyens de chargement pour stockage (2) et préparés en association à une commande, avec :
un stock d'articles (5) ;
un premier équipement technique de manutention (8) transportant les moyens de chargement pour stockage (2) prélevés du stock d'articles (5) vers un poste de préparation de commande (3) fonctionnant sans personnel ;
une unité de préhension (9) entièrement automatisée sur le poste de préparation de commande (3), qui prélève les articles de la commande à préparer des moyens de chargement pour stockage (2) et les dépose en association à la commande, les articles associés à une commande, déposés en particulier dans un moyen de chargement pour commande (4), étant ensuite évacués au moyen d'un deuxième équipement technique de manutention (10) ;
un dispositif d'identification d'image (13) pour la détermination de points de préhension possibles pour l'unité de préhension (9), afin de saisir des articles des moyens de chargement pour stockage (2), **caractérisé en ce que**
le dispositif d'identification d'image (13) comporte au moins deux caméras (14) au niveau de l'unité de préhension (9), dont les directions d'enregistrement (15) sont ajustées l'une à l'autre et en particulier inclinées l'une vers l'autre dans le moyen de chargement pour stockage (2) situé dans la zone de saisie (12) de l'unité de préhension (9), et **en ce que** l'unité de préhension (9) peut également être rapidement déplacée de côté pour la détermination de points de préhension possibles, afin de donner à au moins deux caméras (14) du dispositif d'identification d'image (13) une vue libre sur les articles dans le moyen de chargement pour stockage (2).

2. Système de stockage et de préparation de commandes (1) selon la revendication 1, **caractérisé en ce que** le dispositif d'identification d'image (13) est prévu pour la détermination des points de préhension possibles et l'unité de préhension (9) pour la saisie des articles du moyen de chargement pour stockage (2), alors que le moyen de chargement pour stockage (2) est fixe ou est transporté à vitesse lente ou en particulier à la vitesse de transport normale du premier équipement technique de manutention (8).

3. Système de stockage et de préparation de commandes (1) selon l'une des revendications précédentes, **caractérisé en ce que** l'unité de préhension (9) est prévue pour ajuster les points de préhension pour la réception des articles y compris pendant l'approche du préhenseur vers l'article à saisir, si les points de préhension possibles déterminés couramment par le dispositif d'identification d'image (13) ont changé.

4. Système de stockage et de préparation de commandes (1) selon l'une des revendications précédentes, **caractérisé en ce qu'**au moins un des moyens de chargement pour stockage (2) présentant une longueur (L), une largeur (B) et une hauteur (H) fait partie du système de stockage et de préparation de commandes (1), et **en ce que** la distance entre les au moins deux caméras (14), et la distance des caméras (14) au moyen de chargement pour stockage (2) sont fixées en fonction de la hauteur (H) et/ou de la largeur (B) du moyen de chargement de stockage (2) ou du compartimentage (17) du moyen de chargement de stockage (2) transporté par le premier équipement technique de manutention.

5. Système de stockage et de préparation de commandes (1) selon l'une des revendications précédentes, **caractérisé en ce que** des moyens d'éclairage (18) sont prévus, lesquels éclairent le moyen de chargement pour stockage (2) situé dans la zone de saisie (12), en particulier avec un motif ou un réseau.

6. Système de stockage et de préparation de commandes (1) selon la revendication 5, **caractérisé en ce que** les moyens d'éclairage (18) éclairent dans la plage de fréquences invisible pour l'homme, et **en ce que** les caméras (14) sont prévues avec une sensibilité dans cette plage de fréquences en particulier.

7. Système de stockage et de préparation de commandes (1) selon l'une des revendications précédentes, **caractérisé en ce qu'**au moins quatre caméras (14) sont disposées autour de l'unité de préhension (9).

8. Système de stockage et de préparation de commandes (1) selon l'une des revendications précédentes, **caractérisé en ce qu'**un abattant est prévu sur au moins un moyen de chargement pour commande (4), et **en ce que** l'unité de préhension (9) est prévue pour déposer sur l'abattant les articles prélevés des moyens de chargement pour stockage (2), avant que ceux-ci soient basculés par l'abattant dans le moyen de chargement pour commande (4).

9. Système de stockage et de préparation de commandes (1) selon l'une des revendications précédentes, **caractérisé en ce qu'**un marquage caractéristique de l'article, présenté sur l'article saisi par l'unité de préhension (9), est détecté par le dispositif d'identification d'image (13) et **en ce que** l'unité de préhension (9) est prévue pour déposer en conséquence l'article dans le moyen de chargement pour commande (4) ou dans un autre moyen de chargement.

10. Système de stockage et de préparation de commandes (1) selon la revendication 9, **caractérisé en ce que** le dispositif d'identification d'image (13) comporte une caméra additionnelle (14) pour la détection du marquage de l'article, et **en ce que** l'unité de préhension (9) maintient l'article saisi dans la zone d'enregistrement de la caméra additionnelle (14) pour la détection du marquage.

11. Système de stockage et de préparation de commandes (1) selon l'une des revendications précédentes, **caractérisé en ce que** les articles préparés en commande par l'unité de préhension (9) sont empilés ou dressés dans un moyen de chargement pour commande (4).

12. Système de stockage et de préparation de commandes (1) selon l'une des revendications précédentes, **caractérisé en ce que** l'unité de préhension (9) est prévue pour recueillir des moyens de chargement pour stockage (2) vides depuis le premier équipement technique de manutention (8) jusqu'au deuxième équipement technique de manutention (10).

13. Poste de préparation de commande (3) fonctionnant sans personnel pour un système de stockage et de préparation de commandes (1) pour la préparation entièrement automatisée de commandes d'articles stockés dans des moyens de chargement pour stockage (2) et préparés en association à une commande, ledit poste de préparation de commande (3) comprenant :
une unité de préhension (9) entièrement automatisée, qui prélève les articles de la commande à préparer des moyens de chargement pour stockage (2) et les dépose en association à la commande, les articles associés à une commande, déposés en particulier dans un moyen de chargement pour commande (4), étant ensuite évacués au moyen d'un deuxième équipement technique de manutention (10) ;
et un dispositif d'identification d'image (13) pour la détermination de points de préhension possibles pour l'unité de préhension (9), afin de saisir des articles des moyens de chargement pour stockage (2), **caractérisé en ce que**
le dispositif d'identification d'image (13) comporte au moins deux caméras (14) au niveau de l'unité de préhension (9), dont les directions d'enregistrement (15) sont ajustées l'une à l'autre et en particulier inclinées l'une vers l'autre dans le moyen de chargement pour stockage (2) situé dans la zone de saisie (12) de l'unité de préhension (9), et **en ce que** l'unité de préhension (9) peut également être rapidement déplacée de côté pour la détermination de points de préhension possibles, afin de donner à au moins deux caméras (14) du dispositif d'identification d'image (13) une vue libre sur les articles dans le moyen de chargement pour stockage (2).
